# FASCICULE DE BREVET EUROPEEN

(11) **EP 3 239 079 B1**
(45) Date de publication et mention de la délivrance du brevet: **14.02.2024**
(21) Numéro de dépôt: 17305458.6
(22) Date de dépôt: 20.04.2017
(51) Int. Cl.: B65G 47/86, B29C 49/42, B65G 54/02

(54) **INSTALLATION DE MANUTENTION DE CORPS CREUX, COMPRENANT UN CONVOYEUR DE DISTRIBUTION ET DES UNITES DE TRAITEMENT SATELLITES**
FÖRDERANLAGE FÜR HOHLKÖRPER, DIE EIN FÖRDERBAND ZUR VERTEILUNG UND SATELLITENEINHEITEN ZUR BEARBEITUNG UMFASST
FACILITY FOR HANDLING HOLLOW BODIES, COMPRISING A DISTRIBUTION CONVEYOR AND SATELLITE TREATMENT UNITS

(30) Priorité: 25.04.2016 FR 1653610
(43) Date de publication de la demande: 01.11.2017
(73) Titulaire: Sidel Participations, 76930 Octeville-sur-Mer (FR)
(72) Inventeur: LECOMTE, Frederic, 76930 Octeville-sur-mer (FR); DUCLOS, Yves-Alban, 76930 Octeville-sur-mer (FR)
(74) Mandataire: Sidel Group

(56) Documents cités:
- EP-A2- 2 689 933
- WO-A1-2015/036197
- DE-A1-102010 018 153
- DE-A1-102013 112 091
- DE-A1-102014 103 632
- JP-A- H0 551 087

## Description

L'invention a trait à la manutention des corps creux, et plus précisément la manutention des préformes et des récipients en matière plastique dans une ligne de production de récipients à partir de préformes. Dans ce qui suit, l'expression « corps creux » désigne indistinctement une préforme ou un récipient, ou encore un récipient intermédiaire en cours de formage.

Une telle ligne de production comprend plusieurs unités de traitement conçues pour effectuer chacune un (ou plusieurs) traitement(s) donné(s) sur la préforme ou le récipient.

Classiquement, une ligne de production comprend ainsi, plusieurs unités de traitement successives :
- une unité de conditionnement thermique des préformes, conçue pour chauffer les préformes à une température supérieure à la température de transition vitreuse de la matière (dans le cas du polytéréphtalate d'éthylène ou PET, dont la température de transition vitreuse est de 80°C environ, la température de chauffe des préformes est généralement de 120°C environ) ;
- une unité de formage des récipients par soufflage ou étirage soufflage des préformes chaudes ;
- éventuellement une unité de rinçage des récipients ainsi formés ;
- une unité de remplissage des récipients formés (et éventuellement rincés) avec un produit (par ex. une boisson) ;
- une unité de bouchage des récipients remplis ;
- une unité d'étiquetage des récipients bouchés.

Dans l'unité de conditionnement thermique, les préformes sont généralement transportées le long d'un trajet linéaire, en étant accrochées à des supports tournants appelés tournettes.

Dans les autres unités de traitement, les préformes (puis les récipients) sont généralement transportées le long de trajets circulaires, chaque unité de traitement comprenant un carrousel à la périphérie duquel sont montés des dispositifs de préhension des préformes (ou des récipients).

Les unités de traitement sont montées en série, et des dispositifs de transfert sont intercalés entre elles, pour transférer les préformes ou les récipients de l'une à l'autre. Chaque dispositif de transfert se présente ordinairement sous forme d'une roue équipée, à sa périphérie, de pinces qui saisissent les préformes (ou les récipients) à la sortie d'une unité de traitement donnée et les délivrent à l'unité de traitement suivante, après un parcours en arc de cercle.

Cette architecture ne va pas sans inconvénient.

Premièrement, dans certaines roues de transfert, l'espace (appelé pas) entre les corps creux est fixe. Si le pas ou la vitesse de rotation d'une unité de traitement amont change, seule une variation de vitesse de rotation de la roue de transfert permet de s'adapter au nouveau pas (ou à la nouvelle vitesse de rotation) de l'unité de traitement. Mais, dans ce cas, il est nécessaire d'adapter aussi le pas de l'unité de traitement située en aval de la roue de transfert, et ainsi de suite sur toute la partie de la ligne de production située encore en aval. Autant dire qu'une modification de la cadence de l'une seule des unités de traitement a des répercussions sur l'ensemble de la ligne. Pour remédier à cette difficulté, il a été proposé de monter sur la ligne des zones de stock tampon, dans lesquelles les corps creux sont accumulés temporairement. Mais un tel stock tampon, qui peut également être employé pour éviter les arrêts sur toute la ligne en cas d'intervention ponctuelle de courte durée sur l'une des unités de traitement, pose un problème d'encombrement.

Pour remédier à cette première difficulté, on a proposé des roues de transfert à changement de pas. Dans une telle roue de transfert, typiquement interposée entre l'unité de conditionnement thermique (à la sortie de laquelle le pas entre deux préformes successives est par ex. de 40 mm environ) et l'unité de formage des récipients (à l'entrée de laquelle le pas entre deux préformes successives est par ex. de 500 mm), les pinces sont montées sur des bras articulés qui, entre la sortie de l'unité de conditionnement thermique et l'entrée de l'unité de formage, sont écartés angulairement les uns des autres au moyen d'une came ou de tout autre dispositif équivalent. Mais les roues à changement de pas sont assez complexes et fragiles, et doivent faire l'objet de fréquentes opérations de maintenance qui immobilisent toute la ligne.

Deuxièmement, l'architecture à roues de transfert est relativement contraignante en termes d'occupation de l'espace, et doit être revue notamment lorsqu'il apparaît nécessaire de greffer sur une ligne existante une nouvelle unité de traitement.

Troisièmement, il est nécessaire d'éloigner suffisamment les unités de traitement les unes des autres pour ménager autour de chacune une zone de circulation facilitant les opérations de maintenance. Aussi, pour combler les espaces entre elles, on a tendance à multiplier les roues de transfert mises bout à bout, ce qui pose les problèmes suivants :
- augmentation de la complexité des opérations de transfert ;
- multiplication du nombre de manipulations des corps creux, et donc du risque d'endommagement de ceux-ci ;
- augmentation du nombre de corps creux en transit entre les différentes unités de transfert, potentiellement mis au rebut en cas d'arrêt d'urgence dû, par ex., à une défaillance grave d'une unité de traitement.

Il a été proposé dans certaines zones, de remplacer les roues par des dispositifs de transfert équipés d'éléments individuels de transfert qui se meuvent indépendamment les uns des autres sur une piste magnétique, cf. la demande de brevet européen EP 2 889 238 (Sidel S.p.a.). Ce document propose même une solution, illustrée sur sa figure 6, consistant à englober les différentes unités de traitement à l'intérieur de la piste sur laquelle se meuvent les éléments de transfert.

Par ailleurs, le document DE10 2013 112091 décrit une installation selon le préambule de la revendication 1. Le document DE10 2010 018153 décrit un appareil de transport pour une installation manipulant un récipient. Le document DE10 2014 103632 décrit un dispositif de transport à l'intérieur d'une installation de traitement de récipients. Document WO2015036197 décrit un dispositif de transport pour transporter des conteneurs dans un système de traitement de conteneurs qui a une première unité de traitement de conteneurs et une seconde unité de traitement de conteneurs,

S'il est vrai que la modification du pas ou plus généralement de la cadence de l'une quelconque des unités de traitement n'a pas d'incidence sur le fonctionnement général de la ligne (sauf à prévoir des zones de stockage tampon, qui peuvent être créées par simple modification locale du pas entre les éléments de transfert), tous les problèmes ne sont pas résolus. D'une part, toute panne affectant l'une des unités de traitement ou le dispositif de transfert bloque la ligne ; d'autre part, la greffe d'une nouvelle unité de traitement nécessite de revoir l'architecture de l'ensemble de la ligne.

Un objectif est par conséquent de remédier aux problèmes précités, et en particulier de proposer une architecture de ligne de production modulaire permettant de supprimer, remplacer ou greffer une unité de traitement en conservant l'architecture générale de la ligne.

A cet effet, il est proposé une installation selon la revendication 1 de manutention de corps creux en matière plastique, qui comprend :
- une pluralité d'unités de traitement des corps creux, qui définissent chacune pour les corps creux un circuit de traitement s'étendant entre un point d'entrée et un point de sortie ;
- un convoyeur de distribution des corps creux aux unités de traitement, comprenant une piste en boucle fermée et une pluralité de dispositifs individuels de préhension des corps creux, qui circulent sur cette piste ;
dans laquelle :
- les unités de traitement sont disposées à la périphérie (et de préférence à l'extérieur) du convoyeur,
- le convoyeur définit, en regard de chaque unité de traitement, un point de chargement où chaque corps creux est prélevé d'un dispositif de préhension pour être transféré à l'unité de traitement et y être traité, et un point de déchargement où chaque corps creux traité est transféré de l'unité de traitement à un dispositif de préhension.

De la sorte, les unités de traitement se présentent sous la forme de satellites disposés autour du convoyeur de distribution. Il est possible de les déplacer, de les retirer ou d'en greffer selon les opérations qui doivent être réalisées au sein de l'installation (typiquement des opérations réalisées sur les préformes ou les récipients lorsque l'installation est une ligne de production de récipients), sans que l'architecture générale de celle-ci ne s'en trouve altérée.

Cette installation peut comprendre d'autres caractéristiques supplémentaires, seules ou en combinaison.

Ainsi :
- le point de déchargement et le point de chargement peuvent être distincts respectivement du point d'entrée et du point de sortie, et l'installation peut alors comprendre, interposées entre le convoyeur de distribution et chaque unité de traitement :
   ∘ une roue de transfert d'entrée qui prélève au point de chargement les corps creux du convoyeur de distribution et les délivre à l'unité de traitement au point d'entrée, et
   ∘ une roue de transfert de sortie qui prélève au point de sortie les corps creux traités de l'unité de traitement et les délivre au point de déchargement au convoyeur ;
- le point de chargement et le point de déchargement peuvent être confondus respectivement avec le point d'entrée et le point de sortie de l'unité de traitement ;
- le convoyeur peut comprendre une alternance de dispositifs de préhension porteurs d'un corps creux et de dispositifs de préhension vides ;
- tout dispositif de préhension porteur d'un corps creux en amont d'une unité de traitement peut être vide en aval de celle-ci, et tout dispositif de préhension vide en amont de l'unité de traitement est alors porteur d'un corps creux traité en aval de celle-ci ;
- sur la piste, le point de déchargement peut être situé en amont du point de chargement ;
- la piste du convoyeur peut être magnétique.

D'autres objets et avantages de l'invention apparaîtront à la lumière de la description d'un mode de réalisation, faite ci-après en référence aux dessins annexés dans lesquels :
- la figure 1 est une vue schématique d'une installation complète de manutention de corps creux, selon un premier mode de réalisation ;
- la figure 2 est une vue en perspective d'un détail de l'installation de la figure 1 ;
- la figure 3 est une vue schématique partielle d'une installation de manutention de corps creux, selon un deuxième mode de réalisation, qui n'est pas conforme à l'invention;
- la figure 4 est une vue schématique partielle d'une installation de manutention de corps creux, selon une variante du deuxième mode de réalisation, qui n'est pas conforme à l'invention.

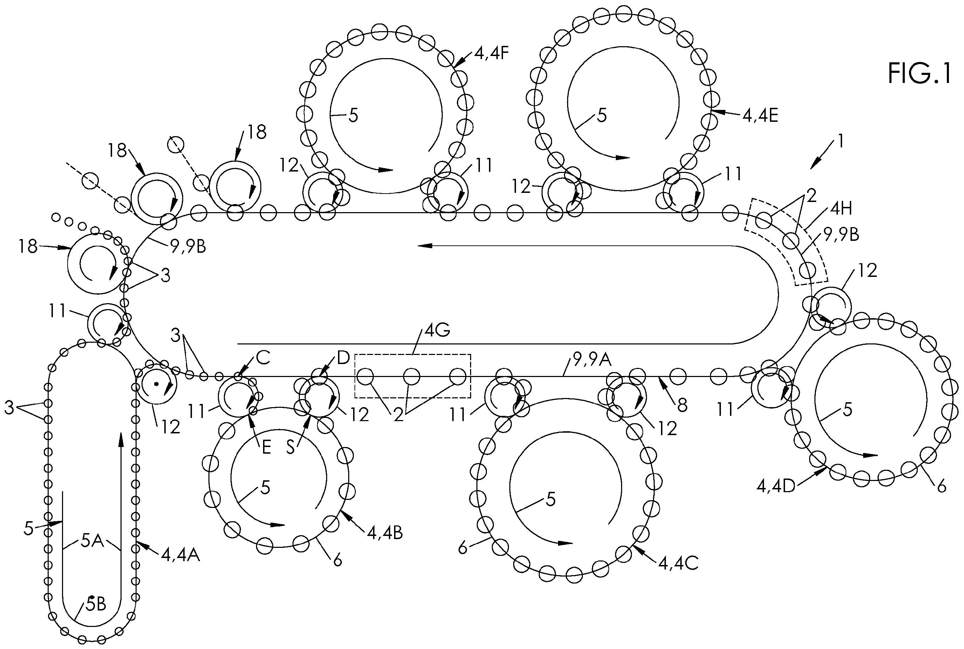

Sur la figure 1 est représentée une installation **1** de manutention de corps **2, 3** creux en matière plastique. Il peut notamment s'agir d'une ligne de production de récipients **2** à partir de préformes **3** en matière plastique, typiquement en polytéréphtalate d'éthylène (PET). L'expression « corps creux » désigne dans ce cas indifféremment les préformes **3** ou les récipients **2** qui sont formés à partir de celles-ci. Sur la figure 1, les préformes **3** sont schématisées par des cercles de petit diamètre, et les récipients **2** sous forme de cercles de plus grand diamètre. La taille et la densité de corps **2, 3** creux tracés sur la figure 1 n'ont qu'une vocation d'illustration et ne rendent compte ni de l'échelle ni la capacité de l'installation **1.**

L'installation **1** comprend, en premier lieu, une pluralité d'unités **4** de traitement des corps **2, 3** creux, qui définissent chacune pour ceux-ci un circuit **5** de traitement qui s'étend entre un point E d'entrée où les corps **2, 3** creux sont introduits dans l'unité **4** de traitement et un point S de sortie où les corps **2, 3** creux sont évacués de l'unité **4** de traitement.

Une ligne typique de production de récipients **2** à partir de préformes **3** comprend une série d'unités **4** de traitement montées en série et prévues chacune pour réaliser sur les préformes **3** ou les récipients **2** une fonction particulière, à savoir :
- une unité **4A** de conditionnement thermique des préformes **3** (également appelée four), configurée pour porter les préformes **3** à une température supérieure à la température de transition vitreuse de la matière (dans le cas du PET, dont la température de transition vitreuse est de 80°C environ, la température de chauffe des préformes est ordinairement de 120°C environ) ; cette unité **4A** de conditionnement thermique comprend ordinairement une série de sources de rayonnement infrarouge (typiquement des lampes halogène) ou une série de sources émettant dans le domaine des micro-ondes, devant lesquelles les préformes **3** sont transportées au défilé (Dans un mode de réalisation alternatif, non représenté, des postes individuels de chauffe sont embarqués à la périphérie d'un carrousel pour procéder à une chauffe individuelle des préformes) ;
- une unité **4B** de formage des récipients **2** par soufflage ou étirage soufflage (également appelée souffleuse), qui comprend un carrousel **6** et, montés sur celui-ci, une pluralité de postes **7** de traitement tels que des moules à l'empreinte des récipients **2** ;
- une unité **4C** de rinçage (également appelée rinceuse) qui comprend également un carrousel et, montées sur celui-ci, une pluralité de buses d'injection d'un liquide de rinçage dans les récipients **2** ;
- une unité **4D** de remplissage (également appelée remplisseuse) qui comprend un carrousel et, montées sur celui-ci, une pluralité de vannes de distribution d'un produit (notamment alimentaire, typiquement une boisson) dans les récipients **2** ;
- une unité **4E** de bouchage (également appelée boucheuse), qui comprend un carrousel et, montés sur celui-ci, des applicateurs de bouchons pour fermer de manière étanche les récipients **2** préalablement remplis ;
- une unité **4F** d'étiquetage (également appelée étiqueteuse), qui comprend un carrousel et, montés sur celui-ci, une pluralité de postes d'étiquetage configurés pour appliquer sur chaque récipient **2** rempli et bouché une étiquette à valeur informative ;
- une unité **4G** de refroidissement des fonds des récipients **2** en aval de l'unité **4B** de formage ;
- une unité **4H** de séchage des récipients **2** en aval de l'unité **4E** de bouchage.

Ces unités **4** de traitement sont évoquées à titre illustratif et non limitatif. Certaines d'entre elles peuvent être optionnelles, comme l'unité **4C** de rinçage, l'unité **4G** de refroidissement ou encore l'unité **4H** de séchage. D'autres pourraient être combinées, comme l'unité **4D** de remplissage et l'unité **4E** de bouchage, sous forme d'une seule unité de remplissage et bouchage équipée de vannes de distribution et d'applicateurs de bouchons.

Certaines unités **4** de traitement (notamment la souffleuse **4B,** la rinceuse **4C,** la remplisseuse **4D,** la boucheuse **4E** et l'étiqueteuse **4F**) peuvent comprendre une pluralité de postes **7** de traitement (les moules **7** dans le cas de la souffleuse **4B**) configurés pour traiter chacun un corps **2, 3** creux de manière individuelle.

On voit que, dans l'exemple illustré, le profil du circuit **5** de traitement peut varier d'une unité **4** de traitement à l'autre. Ainsi, le circuit **5** de traitement de l'unité **4A** de conditionnement thermique comprend une ou plusieurs section(s) **5A** droite(s) et une ou plusieurs section(s) **5B** en arc de cercle.

Dans l'exemple illustré, les autres unités **4** de traitement (souffleuse **4B,** rinceuse **4C,** remplisseuse **4D,** boucheuse **4E,** étiqueteuse **4F**) définissent chacune un circuit **5** de traitement circulaire (ou, à tout le moins, en arc de cercle).

L'installation **1** comprend, en deuxième lieu, un convoyeur **8** de distribution des corps **2, 3** creux aux unités **4** de traitement, qui comprend une piste **9** en boucle fermée et une pluralité de dispositifs **10** de préhension individuels des corps **2, 3** creux, qui circulent sur cette piste **9.**

La piste **9** peut comprendre des sections **9A** droites et/ou des sections **9B** courbes, comme dans l'exemple illustré sur la figure **1** où la piste **9** présente une forme ovale (non limitative).

Comme on le voit bien sur la figure **1****,** les unités **4** de traitement sont disposées à la périphérie du convoyeur **8,** c'est-à-dire le long du pourtour de celui-ci.

Selon un premier mode de réalisation illustré sur les figures, les unités **4** de traitement sont disposées à l'extérieur du convoyeur **8,** c'est-à-dire à l'extérieur de l'espace délimité par la boucle fermée définie par la piste **9,** de sorte que les unités **4** de traitement forment des satellites autour du convoyeur **8.** La répartition des unités **4** de traitement autour du convoyeur **8** peut être imposée par les contraintes du lieu dans lequel l'installation **1** est entreposée. Dans l'exemple illustré, les unités **4** de traitement sont réparties de manière homogène mais certaines unités **4** de traitement pourraient être groupées, par ex. la remplisseuse **4D** et la boucheuse **4E,** pour limiter les risques d'éclaboussure de produit après le remplissage des récipients **2.**

Selon un deuxième mode de réalisation non représenté, les unités **4** de traitement pourraient être disposées à l'intérieur du convoyeur **8,** c'est-à-dire, à l'intérieur de l'espace délimité par la boucle fermée définie par la piste **9,** ce qui a pour avantage de limiter l'encombrement au sol de l'installation.

Le convoyeur **8** assure la distribution des corps **2, 3** creux (préformes **3** en amont de la souffleuse puis récipients **2** en aval de celle-ci), c'est-à-dire, pour chaque unité **4** de traitement, son alimentation en corps **2, 3** creux non traités puis l'évacuation des corps **2, 3** creux traités, ainsi que le transfert des corps **2, 3** creux traités d'une unité **4** de traitement à la suivante.

A cet effet, le convoyeur **8** définit, en regard de chaque unité **4** de traitement :
- un point **C** de chargement (de l'unité **4** de traitement) où chaque corps **2, 3** creux est prélevé du convoyeur **8** pour être transféré à l'unité **4** de traitement et y être traité, et
- un point **D** de déchargement (de l'unité **4** de traitement) où chaque corps **2, 3** creux traité est transféré de l'unité **4** de traitement au convoyeur **8.**

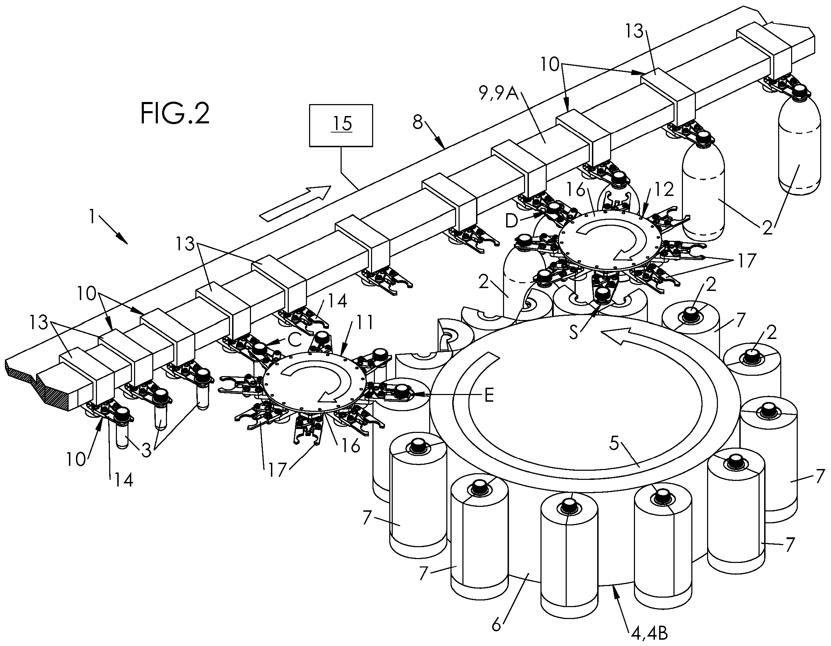

Selon un premier mode de réalisation illustré sur les figures **1** et **2****,** les corps **2, 3** creux ne sont pas directement transférés du convoyeur **8** à chaque unité **4** de traitement et inversement. En effet, dans ce mode de réalisation, le point **C** de chargement est distinct du point **E** d'entrée, et le point **D** de déchargement est distinct du point **S** de sortie, et l'installation **1** comprend des roues **11, 12** de transfert, interposées entre le convoyeur **8** et chaque unité **4** de traitement et par lesquelles les corps **2, 3** creux transitent.

De plus, le point C de chargement est distinct du point D de déchargement, ainsi que le point E d'entrée est distinct du point S de sortie.

Plus précisément, dans ce mode de réalisation, l'installation comprend, pour chaque unité **4** de traitement :
- une roue **11** de transfert d'entrée qui prélève au point **C** de chargement les corps **2, 3** creux du convoyeur **8** de distribution et les délivre à l'unité **4** de traitement au point **E** d'entrée, et
- une roue **12** de transfert de sortie qui prélève au point **S** de sortie les corps **2, 3** creux traités de l'unité **4** de traitement et les délivre au point **D** de déchargement au convoyeur **8.**

On a illustré ce mode de réalisation plus en détail sur la figure **2****,** qui montre une section **9A** droite de la piste **9,** une unité **4** de traitement, en l'espèce une souffleuse **4B,** et les roues **11, 12** de transfert interposées entre le convoyeur **8** et la souffleuse **4B.**

Comme on le voit sur la figure 2, chaque dispositif **10** de préhension comprend un chariot **13** et une pince **14** montée sur le chariot **13** pour assurer la préhension d'une préforme **3** (en amont de la souffleuse **4B,** c'est-à-dire en amont du point **C** de chargement) ou un récipient **2** (en aval de la souffleuse **4B,** c'est-à-dire en aval du point **D** de déchargement).

Dans l'exemple illustré sur la figure 2, la piste **9** est magnétique. Elle intègre typiquement un moteur linéaire synchrone à stator long, composé d'une série d'électroaimants, chaque chariot **13** incluant un rotor formé typiquement d'un ou plusieurs aimant(s) permanent(s) positionné(s) en regard du moteur. Le convoyeur **8** comprend avantageusement une unité **15** de contrôle configurée pour commander l'alimentation en courant de chaque électroaimant, et plus précisément pour faire varier la tension et la fréquence du courant circulant dans chaque électroaimant. De la sorte, l'unité **15** de contrôle peut commander le déplacement indépendant de chaque chariot **13,** et peut notamment contrôler la vitesse de chaque chariot **13** indépendamment des autres. En d'autres termes, l'unité **15** de contrôle peut accélérer, freiner ou encore maintenir constante la vitesse de chaque chariot **13** en tout lieu de la piste **9.**

Au point **C** de chargement et au point **D** de déchargement, le convoyeur **8** est avantageusement équipé d'une came qui agit sur un galet (par ex. un roulement à bille) porté par la pince **14** de chaque dispositif **10** de préhension pour l'ouvrir et ainsi libérer un corps **2, 3** creux, respectivement pour la fermer et ainsi agripper un corps **2, 3** creux.

Comme on le voit sur la figure **2****,** chaque roue **11, 12** de transfert comprend un plateau **16** circulaire monté en rotation autour d'un axe, et une pluralité de pinces **17** montées sur le plateau **16** à la périphérie de celui-ci. Des cames (non visibles) assurent successivement, pour la roue **11** de transfert d'entrée, l'ouverture et la fermeture de chaque pince **14** au point **C** de chargement et au point **E** d'entrée. De la même manière, des cames (non visibles) assurent successivement, pour la roue **12** de transfert de sortie, l'ouverture et la fermeture de chaque pince **14** au point S de sortie et au point **D** de déchargement.

De la sorte, les corps **2, 3** creux sont successivement :
- amenés par le convoyeur **8** jusqu'au point **C** de chargement,
- transférés, à ce point **C,** sur la roue **11** de transfert d'entrée,
- déplacés par celle-ci jusqu'au point **E** d'entrée,
- transférés à ce point **E** à l'unité **4** de traitement,
- traités en étant déplacés le long du circuit **5** de traitement jusqu'au point **S** de sortie,
- transférés en ce point **S** sur la roue **12** de transfert de sortie,
- déplacés par celle-ci jusqu'au point **D** de déchargement,
- transférés à ce point **D** de déchargement sur le convoyeur **8,** et
- déplacés par celui-ci jusqu'à l'unité **4** de traitement suivante ou jusqu'à un dispositif **18** d'évacuation qui, sur la figure 1, se présente sous forme d'une (ou plusieurs) roue(s) de transfert tangente(s) à la piste **9.**

On notera que, au niveau (ou en aval) du dispositif **18** d'évacuation, les récipients peuvent être groupés par packs. A cet effet, des aiguillages peuvent être prévus pour agencer les récipients de manière organisée.

Pour résumer, lorsque l'unité **4** de traitement est en production, le mouvement des chariots **13** du convoyeur **8** est synchronisé avec chaque roue **11, 12,** de transfert afin de réaliser le chargement au point **C** et le déchargement au point **D** des corps creux sur l'unité de traitement.

En variante, au moins une unité **4** de traitement peut être désactivée sans toutefois stopper la production de l'installation. Pour ce faire, malgré l'arrêt de l'unité **4** de traitement, les roues **11, 12** de transfert continuent de fonctionner. Le mouvement des chariots **13** du convoyeur 8 est désynchronisé par rapport à la rotation de chacune des roues **11, 12** de transfert afin de contourner le point **C** de chargement et le point **D** de déchargement par une voie de contournement.

Pour accéder à cette voie de contournement, le chariot **13** transportant le corps **2, 3** creux passe dans l'espace compris entre deux pinces successives fixées sur les roues **11, 12** de transfert.

La désynchronisation des roues **11, 12** de transfert est relativement simple à mettre en oeuvre. En effet, pour réaliser la désynchronisation des roues de transfert **11, 12** par rapport au chariot **13,** la vitesse du chariot est augmentée ou diminuée par rapport à une vitesse nominale de synchronisation entre les roues de transfert et les chariots.

La voie de contournement correspond au tronçon du convoyeur **8** se trouvant entre le point **C** de chargement et le point **D** de déchargement sur lequel circule le chariot **13** transportant le corps **2, 3** creux.

L'un des avantages de cette voie de contournement est de pourvoir monter en série un certain nombre d'unité de traitement et de pouvoir les utiliser en fonction du besoin de la ligne de production. En d'autres termes, cette voie de contournement permet notamment d'installer un certain nombre d'unité de traitement en série. Par exemple, dans le cas où les unités de traitement sont des étiqueteuses, les récipients peuvent être répartis en fonction de l'étiquette à mettre sur le récipient ou pour augmenter la cadence de l'installation en divisant le nombre de récipient arrivant sur les différentes étiqueteuses. Bien entendu, ce cas particulier peut être généralisé aux autres unités de traitement constituant la ligne de production, les remplisseuses, les boucheuses...

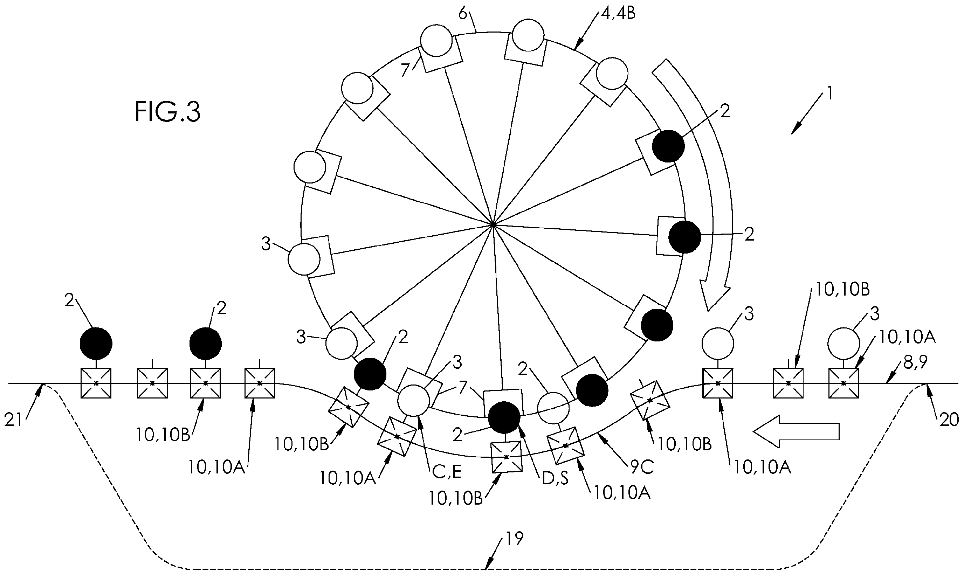

Selon un deuxième mode de réalisation, illustré sur la figure 3, les corps **2, 3** creux sont directement transférés du convoyeur **8** à chaque unité **4** de traitement et réciproquement. Dans ce cas, le point **C** de chargement est confondu avec le point **E** d'entrée, et le point **D** de déchargement est confondu avec le point **S** de sortie.

Comme on le voit sur la figure **3****,** la piste **9** comprend, au voisinage de l'unité **4** de traitement, une section **9C** de chargement/déchargement qui suit localement le contour de celle-ci. L'unité **4** de traitement est elle-même équipée d'une série de postes **7** de traitement individuels, le terme « individuel » signifiant que les corps creux sont traités individuellement ou par paires.

Dans l'exemple illustré, où le circuit **5** de traitement défini par l'unité **4** de traitement est circulaire, la section **9C** de chargement/déchargement est courbée pour être co-radiale à l'unité **4** de traitement et ainsi faciliter le transfert des corps **2, 3** creux du convoyeur **8** à l'unité **4** de traitement et réciproquement.

Dans cette configuration, le point **D** de déchargement est situé en amont du point **C** de chargement, un corps **2, 3** creux (par ex. un récipient **2**) traité devant être déchargé de chaque poste **7** de traitement individuel (par ex. un moule **7** sur l'unité **4B** de formage) avant que ce dernier prenne en charge un nouveau corps **2, 3** creux (par ex. une préforme **3**) à traiter.

Pour permettre le chargement et le déchargement des corps **2, 3** creux, le convoyeur **8** comprend avantageusement une alternance de dispositifs **10** de préhension chargés (c'est-à-dire porteurs d'un corps **2, 3** creux) et de dispositifs **10** de préhension vides. En d'autres termes, les dispositifs **10** de préhension vont par paire, chaque paire comprenant un dispositif **10** de préhension chargé et un dispositif **10** de préhension vide. Par convention, en amont de l'unité **4** de traitement, on appelle dispositif de préhension impair, que l'on note **10A,** un dispositif **10** de préhension chargé en amont de l'unité **4** de traitement (c'est-à-dire en amont du point **C** de chargement ou du point **E** d'entrée), et dispositif de préhension pair, noté **10B,** un dispositif **10** de préhension vide.

On voit que, dans la section **9C** de chargement/déchargement, les dispositifs **10** de préhension sont accélérés pour amener :
- d'abord, au point **D** de déchargement (c'est-à-dire au point **S** de sortie ) le dispositif **10B** de préhension pair au droit d'un poste **7** de traitement chargé afin de permettre le transfert d'un corps **2, 3** creux traité de l'unité **4** de traitement au dispositif **10B** de préhension pair ;
- ensuite, au point **C** de chargement (c'est-à-dire au point **E** d'entrée) le dispositif **10A** de préhension impair au droit du poste **7** de traitement ainsi vidé pour y charger un nouveau corps **2, 3** creux à traiter.

On voit qu'en aval de l'unité **4** de traitement les dispositifs **10A** de préhension impair sont vides, tandis que les dispositifs **10B** de préhension pair sont chargés.

Pour éviter les interférences entre les trajectoires des récipients **2** et celle des postes **7** de traitement, des déviations locales de trajectoire peuvent être prévues, par ex. au moyen d'une paire de bras articulés montés sur chaque dispositif **10** de préhension et assurant l'un le transfert d'un corps **2, 3** creux vers l'unité **4** de traitement, l'autre la réception et la saisie d'un corps **2, 3** creux traité à la sortie de celle-ci.

Quoi qu'il en soit, ce cycle peut être reproduit pour l'unité **4** de traitement suivante.

Dans ce deuxième mode de réalisation, la piste **9** peut être magnétique, comme précédemment décrit. Dans ce cas, la variation de vitesse des chariots **13** dans la section **9C** de chargement/déchargement est pilotée par l'unité **15** de contrôle.

Selon un mode de réalisation illustré sur la figure **3****,** le convoyeur **8** comprend au moins une voie **19** de contournement qui se raccorde à la piste **9** par un premier aiguillage **20** en amont du point **C** de chargement et par un second aiguillage **21** en aval du point **D** de déchargement, c'est-à-dire respectivement en amont et en aval de l'unité **4** de traitement, de manière à permettre un contournement de celle-ci lorsqu'elle est, au moins temporairement, désactivée.

Ainsi, il est typiquement possible de faire circuler les dispositifs **10** de préhension sur une voie **19** de contournement de l'unité **4C** de rinçage, lorsque celle-ci n'est pas nécessaire dans la production de certains produits (par ex. des récipients **2** remplis d'eau plate), tandis que la voie **19** de contournement est désactivée en cours de production de produits nécessitant l'utilisation de l'unité **4C** de rinçage au sein de la même ligne, typiquement lors de la production de récipients **2** remplis de boissons sensibles, comme des jus de fruits ou du lait.

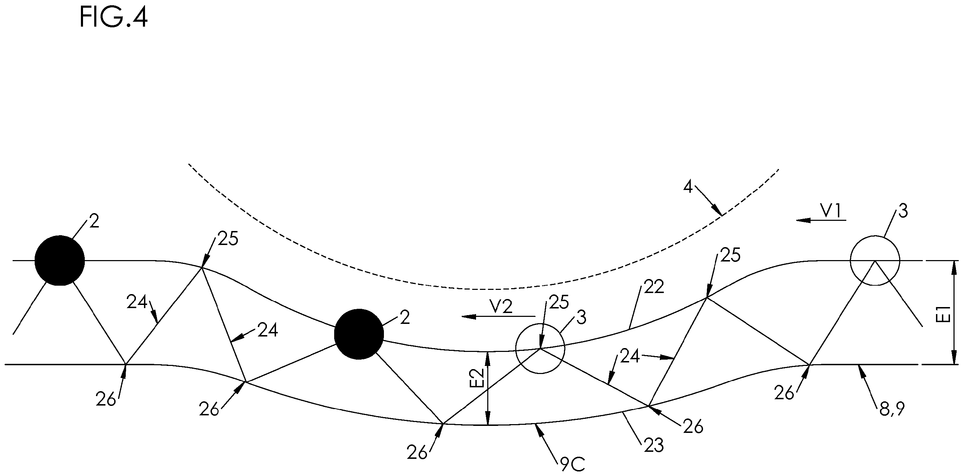

On a illustré sur la figure **4** une variante du deuxième mode de réalisation, dans lequel l'entraînement (et en particulier, dans certaines zones, la variation de la vitesse de déplacement) des dispositifs **10** de préhension est réalisée par des moyens non magnétiques mais mécaniques.

On a représenté schématiquement sur cette figure une section **9C** de chargement/déchargement au droit d'une unité **4** de traitement schématisée par un arc de cercle en pointillés.

Comme on peut le voir, la piste **9** comprend un brin **22** externe et un brin **23** interne qui sont sensiblement parallèles l'un à l'autre. Le terme « parallèle » ne signifie pas ici que les brins **22, 23** sont rectilignes et parallèles au sens purement mathématique, mais que les brins **22, 23,** qui peuvent présenter des sections courbes, ne sont jamais concourants.

Les dispositifs **10** de préhension sont alors reliés les uns aux autres au moyen de bielles **24** interconnectées chacune par une extrémité **25** externe assujettie au brin **22** externe, et par une extrémité **26** interne assujettie au brin **23** interne.

Dans des zones de circulation entre les unités **4** de traitement, les brins **22, 23** sont parallèles et écartés d'une distance **E1.** Dans ces zones de circulation, les dispositifs de préhension se déplacent à une vitesse **V1.**

Dans une ou plusieurs section(s) **9C** de chargement/déchargement, la distance, notée **E2,** entre le brin **22** externe et le brin **23** interne est localement restreinte (**E2 < E1**). Ceci permet d'accroître la vitesse (notée **V2,** avec **V2** > **V1**) de déplacement des dispositifs **10** de préhension, de façon à assurer la mise en correspondance, au point **D** de déchargement (c'est-à-dire au point **S** de sortie), d'un dispositif **10B** de préhension pair avec un poste **7** de traitement chargé, et la mise en correspondance, au point **C** de chargement (c'est-à-dire au point **E** d'entrée), d'un dispositif **10A** de préhension impair au droit du poste **7** de traitement préalablement déchargé au point **D** de déchargement.

On voit que les unités **4** de traitement se présentent sous la forme de satellites disposés autour du convoyeur **8** de distribution, ce qui permet de configurer à volonté l'installation **1,** notamment en déplaçant, en retirant ou en greffant des unités **4** de traitement selon les besoins de la ligne. Ce déplacement, ce retrait et cette greffe peuvent être effectués sans modifier l'architecture de l'installation, qui révèle ainsi son côté modulaire.

Il est notamment possible d'adapter la ligne de production à l'environnement de travail (atelier, entrepôt) dans lequel cette ligne est incluse. En utilisant une voie de contournement, il est possible de désactiver une unité **4** de traitement sans toutefois couper toute la ligne de production, au bénéfice de la continuité de la production. Ainsi, il est facile de désactiver une rinceuse (par ex. pour changer de produit) sans intervention lourde sur la ligne.

L'individualisation des dispositifs **10** de préhension dans le convoyeur **8** procure en soi des avantages supplémentaires :
- chaque dispositif **10** de préhension peut être maintenu dans le convoyeur ou en être retiré pour être nettoyé, réparé ou remplacé ;
- le nombre de dispositifs **10** de préhension circulants peut être adapté à la charge de l'installation **1** : il est possible de retirer un groupe de dispositifs **10** de préhension du convoyeur **8** ou au contraire d'en ajouter ;
- un magasin abritant un stock de dispositifs **10** de préhension peut, à cet effet, être installé en bordure (par ex. à la périphérie) du convoyeur **8** ;
- l'ajout ou le retrait de dispositifs **10** de préhension peut être automatisé en fonction de la cadence de production ;
- la vitesse de déplacement des dispositifs **10** de préhension peut être adaptée aux vitesses respectives des unités **4** de traitement ;
- de manière corollaire, le convoyeur **8** peut, grâce à la variabilité de la vitesse de déplacement des dispositifs **10** de préhension, absorber les éventuelles variations locales (et éventuellement temporaires) de cadence affectant une ou plusieurs unité(s) **4** de traitement.

## Revendications

1. Installation (**1**) de manutention de corps (**2, 3**) creux en matière plastique, qui comprend :
- une pluralité d'unités (**4**) de traitement des corps (**2, 3**) creux, qui définissent chacune pour les corps (**2, 3**) creux un circuit (**5**) de traitement s'étendant entre un point (**E**) d'entrée et un point (**S**) de sortie ;
- un convoyeur (**8**) de distribution des corps (**2, 3**) creux aux unités (**4**) de traitement, comprenant une piste (**9**) en boucle fermée et une pluralité de dispositifs (**10**) de préhension individuels des corps (**2, 3**) creux, qui circulent sur cette piste (**9**) ;
installation (1) dans lequelle:
- les unités (**4**) de traitement sont disposées à la périphérie du convoyeur (**8**),
- le convoyeur (8) comprend une unité (15) de contrôle configurée pour commander le déplacement indépendant de chaque dispositif (10) de préhension individuel le long de la piste (9);
le convoyeur (**8**) définit, en regard de chaque unité (**4**) de traitement, un point (**C**) de chargement où chaque corps (**2, 3**) creux est prélevé d'un dispositif (**10**) de préhension pour être transféré à l'unité (**4**) de traitement et y être traité, et un point (**D**) de déchargement où chaque corps (**2, 3**) creux traité est transféré de l'unité (**4**) de traitement à un dispositif (**10**) de préhension;cette installation (1) étant **caractérisée en ce que**:
l'une des unités (4) de traitement de l'installation (1) est une unité (4) de traitement contournée, l'installation (1) comprenant un moyen de contournement conçu pour qu'un corps creux arrivant à un point (C) de chargement correspondant à une unité (4) de traitement contournée, aille directement au point (D) de déchargement correspondant à la dite unité de traitement contournée en passant par une voie de contournement constituée par le tronçon du convoyeur (8) s'étendant entre le point (C) de chargement et de point (D) de déchargement de ladite unité (4) de traitement contournée;
le moyen de contournement est constitué par le fait que l'unité de contrôle est conçue pour désynchroniser le déplacement des dispositifs (10) de préhension individuels pour empêcher le transfert vers ladite unité de traitement contournée lorsque le corps creux passe au point (C) de chargement.

2. Installation (**1**) selon la revendication 1, **caractérisée en ce que** les unités (**4**) de traitement sont disposées à l'extérieur du convoyeur (**8**).

3. Installation (**1**) selon la revendication 1 ou la revendication 2, **caractérisée** en ce le point (**C**) de chargement et le point (**D**) de déchargement sont distincts respectivement du point (**E**) d'entrée et du point (**S**) de sortie, et en ce qu'elle comprend, interposées entre le convoyeur (**8**) de distribution et chaque unité (**4**) de traitement :
- une roue (**11**) de transfert d'entrée qui prélève au point (**C**) de chargement les corps (**2, 3**) creux du convoyeur (**8**) de distribution et les délivre à l'unité (**4**) de traitement au point (**E**) d'entrée, et
- une roue (**12**) de transfert de sortie qui prélève au point (**S**) de sortie les corps (**2, 3**) creux traités de l'unité (**4**) de traitement et les délivre au point (**D**) de déchargement au convoyeur (**8**).

4. Installation (**1**) selon la revendication 1, **caractérisée en ce que** le point (**C**) de chargement et le point (**D**) de déchargement sont confondus respectivement avec le point (**E**) d'entrée et le point (**S**) de sortie de l'unité (**4**) de traitement.

5. Installation (**1**) selon la revendication 4, **caractérisée en ce que** le convoyeur (**8**) comprend une alternance de dispositifs (**10**) de préhension porteurs d'un corps (**2, 3**) creux et de dispositifs (**10**) de préhension vides.

6. Installation (**1**) selon la revendication 5, **caractérisé en ce que** tout dispositif (**10A**) de préhension porteur d'un corps (**2, 3**) creux en amont d'une unité (**4**) de traitement est vide en aval de celle-ci, et tout dispositif (**10B**) de préhension vide en amont de l'unité (**4**) de traitement est, en aval de celle-ci, porteur d'un corps (**2, 3**) creux traité.

7. Installation (**1**) selon la revendication 5 ou la revendication 6, **caractérisée en ce que**, sur la piste (**9**), le point (**D**) de déchargement est situé en amont du point (**C**) de chargement.

8. Installation (**1**) selon l'une des revendications 1 à 7, **caractérisée en ce que** la piste (**9**) du convoyeur (**8**) est magnétique,

## Patentansprüche

1. Anlage (**1**) zur Handhabung von Hohlkörpern (**2, 3**) aus Kunststoff, die Folgendes beinhaltet:
- eine Vielzahl von Einheiten **(4)** zur Bearbeitung der Hohlkörper (**2, 3**), die für die Hohlkörper (**2, 3**) jeweils einen Bearbeitungskreis (**5**) definieren, der sich zwischen einem Eintrittspunkt (**E**) und einem Austrittspunkt (**S**) erstreckt;
- ein Förderband (**8**) zur Verteilung der Hohlkörper (**2, 3)** an die Bearbeitungseinheiten (**4**), das eine in sich geschlossene Bahn (**9**) und eine Vielzahl von einzelnen Vorrichtungen (**10**) zum Greifen der Hohlkörper (**2, 3**), die auf dieser Bahn (**9**) zirkulieren, beinhaltet;
wobei in der Anlage (1):
- die Bearbeitungseinheiten **(4)** am Umfang des Förderbands (**8**) angeordnet sind,
- das Förderband (8) eine Steuereinheit (15) beinhaltet, die dazu konfiguriert ist, die unabhängige Bewegung jeder einzelnen Greifvorrichtung (10) entlang der Bahn (9) zu steuern;
das Förderband (**8**) gegenüber jeder Bearbeitungseinheit **(4)** einen Ladepunkt (**C**), an dem jeder Hohlkörper (**2, 3**) aus einer Greifvorrichtung (**10**) entnommen wird, um an die Bearbeitungseinheit **(4)** übergeben und dort bearbeitet zu werden, und einen Entladepunkt (**D**), an dem jeder bearbeitete Hohlkörper (**2, 3**) von der Bearbeitungseinheit **(4)** an eine Greifvorrichtung (**10**) übergeben wird, definiert; wobei diese Anlage (1) **dadurch gekennzeichnet ist, dass**:
eine der Bearbeitungseinheiten (4) der Anlage (1) eine umgangene Bearbeitungseinheit (4) ist, wobei die Anlage (1) ein Umgehungsmittel beinhaltet, das dazu ausgelegt ist, dass ein Hohlkörper, der an einem Ladepunkt (C), der einer umgangenen Bearbeitungseinheit (4) entspricht, ankommt, direkt zu dem Entladepunkt (D), der der umgangenen Bearbeitungseinheit entspricht, geht und dabei einen Umgehungsweg nimmt, der durch den Abschnitt des Förderbands (8) gebildet wird, der sich zwischen dem Ladepunkt (C) und dem Entladepunkt (D) der umgangenen Bearbeitungseinheit (4) erstreckt;
das Umgehungsmittel auf der Tatsache basiert, dass die Steuereinheit dazu ausgelegt ist, die Bewegung der einzelnen Greifvorrichtungen (10) zu desynchronisieren, um die Übergabe an die umgangene Bearbeitungseinheit zu verhindern, wenn der Hohlkörper an dem Ladepunkt (C) ankommt.

2. Anlage (**1**) nach Anspruch 1, **dadurch gekennzeichnet, dass** die Bearbeitungseinheiten (**4**) auf der Außenseite des Förderbands (**8**) angeordnet sind.

3. Anlage (**1**) nach Anspruch 1 oder Anspruch 2, **dadurch gekennzeichnet, dass** sich der Ladepunkt (**C**) und der Entladepunkt (**D**) jeweils von dem Eintrittspunkt (**E**) und dem Austrittspunkt (**S**) unterscheiden und dass sie, eingefügt zwischen das Förderband (**8**) zur Verteilung und jede Bearbeitungseinheit (**4**), Folgendes beinhaltet:
- ein Eintrittsübergaberad (**11**), das an dem Ladepunkt (**C**) die Hohlkörper (**2, 3**) aus dem Förderband (**8**) zur Verteilung entnimmt und sie an dem Eintrittspunkt (**E**) an die Bearbeitungseinheit (**4**) liefert, und
- ein Austrittsübergaberad (**12**), das an dem Austrittspunkt (**S**) die bearbeiteten Hohlkörper (**2, 3**) aus der Bearbeitungseinheit (**4**) entnimmt und sie am Entladepunkt (**D**) an das Förderband (**8**) liefert.

4. Anlage (**1**) nach Anspruch 1, **dadurch gekennzeichnet, dass** der Ladepunkt (**C**) und der Entladepunkt (**D**) jeweils mit dem Eintrittspunkt (**E**) und dem Austrittspunkt (**S**) der Bearbeitungseinheit (**4**) zusammenfallen.

5. Anlage (**1**) nach Anspruch 4, **dadurch gekennzeichnet, dass** das Förderband (**8**) eine abwechselnde Anordnung von Greifvorrichtungen (**10**), die einen Hohlkörper (**2, 3**) tragen, und von leeren Greifvorrichtungen (**10**) beinhaltet.

6. Anlage (**1**) nach Anspruch 5, **dadurch gekennzeichnet, dass** jede Greifvorrichtung (**10A**), die stromaufwärts einer Bearbeitungseinheit (**4**) einen Hohlkörper (**2, 3**) trägt, stromabwärts von dieser leer ist, und jede Greifvorrichtung (**10B**), die stromaufwärts der Bearbeitungseinheit (**4**) leer ist, stromabwärts von dieser einen bearbeiteten Hohlkörper (**2, 3**) trägt.

7. Anlage (**1**) nach Anspruch 5 oder Anspruch 6, **dadurch gekennzeichnet, dass** sich auf der Bahn (**9**) der Entladepunkt (**D**) stromaufwärts des Ladepunkts (**C**) befindet.

8. Anlage (**1**) nach einem der Ansprüche 1 bis 7, **dadurch gekennzeichnet, dass** die Bahn (**9**) des Förderbands (**8**) magnetisch ist.

## Claims

1. Installation (1) for handling hollow bodies (2, 3) made of plastics material, which installation comprises:
- a plurality of units (4) for processing hollow bodies (2, 3), each of which units defines, for the hollow bodies (2, 3), a processing circuit (5) extending between an entry point (E) and an exit point (S);
- a conveyor (8) for distributing the hollow bodies (2, 3) to processing units (4), comprising a closed-loop track (9) and a plurality of individual devices (10) for gripping the hollow bodies (2, 3), which devices circulate on this track (9);
in which installation (1):
- the processing units (4) are disposed around the periphery of the conveyor (8),
- the conveyor (8) comprises a control unit (15) configured to make each individual gripping device (10) move along the track (9) independently;
the conveyor (8) defining, for each processing unit (4), a loading point (C) where each hollow body (2, 3) is collected from a gripping device (10) in order to be transferred to the processing unit (4) and processed there, and an unloading point (D) where each processed hollow body (2, 3) is transferred from the processing unit (4) to a gripping device (10); this installation (1) being **characterized in that**:
one of the processing units (4) of the installation (1) is a bypassed processing unit (4), the installation (1) comprising a bypass means designed such that a hollow body arriving at a loading point (C) corresponding to a bypassed processing unit (4) goes directly to the unloading point (D) corresponding to said bypassed processing unit via a bypass route formed by that section of the conveyor (8) that extends between the loading point (C) and the unloading point (D) of said bypassed processing unit (4);
the bypass means is constituted by the fact that the control unit is designed to desynchronize the movement of the individual gripping devices (10) in order to prevent transfer to said bypassed processing unit when the hollow body arrives at the loading point (C).

2. Installation (1) according to Claim 1, **characterized in that** the processing units (4) are disposed on the outside of the conveyor (8).

3. Installation (1) according to Claim 1 or Claim 2, **characterized in that** the loading point (C) and the unloading point (D) are distinct from the entry point (E) and the exit point (S), respectively, and **in that** it comprises, interposed between the distribution conveyor (8) and each processing unit (4):
- an input transfer wheel (11) which, at the loading point (C), collects the hollow bodies (2, 3) from the distribution conveyor (8) and delivers them to the processing unit (4) at the entry point (E), and
- an output transfer wheel (12) which, at the exit point (S), collects the processed hollow bodies (2, 3) from the processing unit (4) and delivers them to the conveyor (8) at the unloading point (D).

4. Installation (1) according to Claim 1, **characterized in that** the loading point (C) and the unloading point (D) coincide with the entry point (E) and the exit point (S), respectively, of the processing unit (4).

5. Installation (1) according to Claim 4, **characterized in that** the conveyor (8) comprises alternating gripping devices (10) that carry a hollow body (2, 3) and empty gripping devices (10).

6. Installation (1) according to Claim 5, **characterized in that** any gripping device (10A) that carries a hollow body (2, 3) upstream of a processing unit (4) is empty downstream of the processing unit, and any gripping device (10B) that is empty upstream of the processing unit (4) carries a processed hollow body (2, 3) downstream of the processing unit.

7. Installation (1) according to Claim 5 or Claim 6, **characterized in that**, on the track (9), the unloading point (D) is located upstream of the loading point (C).

8. Installation (1) according to one of Claims 1 to 7, **characterized in that** the track (9) of the conveyor (8) is magnetic.
